# EUROPEAN PATENT SPECIFICATION

(11) **EP 4 489 192 B1**
(45) Date of publication and mention of the grant of the patent: **16.09.2026**
(21) Application number: 22929951.6
(22) Date of filing: 09.12.2022
(51) Int. Cl.: H01M 50/204, H01M 50/213, H01M 50/284

(54) **BATTERY MODULE**
BATTERIEMODUL
MODULE DE BATTERIE

(30) Priority: 01.03.2022 JP 2022031314
(43) Date of publication of application: 08.01.2025
(73) Proprietor: Panasonic Energy Co., Ltd., Osaka 570-8511 (JP)
(72) Inventor: SAKAMOTO, Tomonori, Kadoma-shi, Osaka 571-0057 (JP)
(74) Representative: Novagraaf International SA
(86) International application number: PCT/JP2022/045515
(87) International publication number: WO 2023/166809

(56) References cited:
- CN-A- 109 037 847
- CN-U- 207 082 579
- CN-U- 213 583 937
- JP-A- 2012 043 684
- JP-A- 2019 536 214
- KR-A- 20150 005 982
- US-A1- 2011 293 998
- US-A1- 2018 006 282

## Description

### TECHNICAL FIELD

The present disclosure relates to a battery module in which battery cells are held in a cell holder and built in an outer case, and particularly to a battery module ensuring safety against infiltrating water in the outer case.

### BACKGROUND ART

In a battery module in which battery cells are built in an outer case, each battery cell is held at a predetermined position in a cell holder made of a molded insulating material. The battery cells are connected in series and allows an optimum output voltage for use to be set, and are connected in parallel to increase a maximum current.

The above-described battery module is required to have safety even in a use environment with water infiltration.

Further, a battery module having a drain hole provided in an outer case and water flowing in is drained to the outside is developed (PTL 1).

### CITATION LIST

### Patent Literature

PTL 1: Japanese Patent Laid-Open Publication No. 2012-43684

### SUMMARY OF INVENTION

A battery module is required to have safety even in a use environment with water infiltration. An adverse effect of the infiltrating water can be implemented by a structure in which the entire inside is embedded in a potting resin. However, this structure has a disadvantage that the potting resin increases a weight of the entire battery module. Further, an outer case of the battery module has a waterproof structure and can be implemented by preventing water infiltration. This structure has a disadvantage requiring measures to prevent an increase in internal pressure caused by gas generation from a battery cell, which is one of unsafe events that can occur due to an internal short circuit in the battery cell.

The battery module, in which a drain hole is provided in the outer case and infiltrating water is drained to the outside of the outer case, has a disadvantage that sufficient safety may not be ensured in various use environments. In particular, it is difficult to ensure safety in a use environment in which water that is submerged and flows in is drained.

The present disclosure has been further developed for a purpose of solving the above disadvantage. An object of the disclosure is to provide a battery module ensuring safety even in a submerged environment.

In a battery module according to an aspect of the disclosure, battery cells are disposed at predetermined positions in a cell holder and housed in an outer case. The cell holder includes: a holding portion into which lower portions of the battery cells are inserted to dispose the battery cells at the predetermined positions; a drainage space exposing the battery cells 1 above the holding portion; a drainage opening configured to drain water flowing into the drainage space; and an insulative partition wall disposed in the drainage space. The insulative partition wall protrudes upward from a surface of the holding portion, and has a lateral width (W).

The battery module described above has an advantage ensuring safety even in a submerged environment.

### BRIEF DESCRIPTION OF DRAWINGS

FIG. 1 is a partially enlarged perspective view of a battery module according to an exemplary embodiment of the disclosure.
FIG. 2 is an exploded perspective view of the battery module shown in FIG. 1.
FIG. 3 is a perspective view of a battery assembly housed in the battery module shown in FIG. 2.
FIG. 4 is an exploded perspective view of the battery assembly shown in FIG. 3.
FIG. 5 is an enlarged perspective view of a cell holder body shown in FIG. 4.
FIG. 6 is an enlarged bottom perspective view of the cell holder body shown in FIG. 4.
FIG. 7 is a plan view of the cell holder body shown in FIG. 5.
FIG. 8 is a cross-sectional view of the cell holder body along a line VIII-VIII shown in FIG. 7.
FIG. 9 is a cross-sectional view of the cell holder body along a line IX-IX shown in FIG. 7.
FIG. 10 is a cross-sectional perspective view of the battery module along a line X-X shown in FIG. 1.
FIG. 11 is an enlarged plan view showing a connection state between a lead plate and a battery cell.

### DESCRIPTION OF EMBODIMENT

A battery module according to an aspect of the disclosure is a battery module including a plurality of battery cells; a cell holder disposing the plurality of battery cells at predetermined positions; and an outer case accommodating the plurality of battery cells and the cell holder therein. The cell holder includes: a holding portion into which lower portions of the plurality of battery cells are inserted to dispose the plurality of battery cells at the predetermined positions; a drainage space exposing the plurality of battery cells above the holding portion through the drainage space; a drainage opening configured to drain water flowing into the drainage space through the drainage opening; and an insulative partition wall disposed in the drainage space, the insulative partition wall protruding upward from a surface of the holding portion. Two battery cells out of the plurality of battery cells having a potential difference between the two battery cells face each other across a facing region. The insulative partition wall is located in the facing region.

The battery module described above has an advantage ensuring safety even in a submerged environment. This is because the battery module described above houses the cell holder, in which the plurality of battery cells are housed, in the outer case, wherein the cell holder includes the drainage space in which the battery cells are exposed above the holding portion, into which the lower portions of the battery cells are inserted and disposed at the predetermined position, and water flowing into the drainage space is drained from the drainage opening, and the insulative partition wall, which protrudes upward from the surface of the holding portion and is disposed in the drainage space, is provided in the facing region of the battery cells having a potential difference. In the battery module having this structure, when water flowing into the drainage space is quickly drained from the drainage opening, it is possible to effectively prevent electric corrosion due to infiltrating water remaining in the drainage space and ensure safety by the insulative partition wall provided in the facing region of the battery cells having a potential difference.

In the battery module according to another aspect of the disclosure, the cell holder may further include a side plate made of an insulating material between side walls of the outer case provided at both sides of the outer case. The side plate may have the drainage opening configured to drain water in the drainage space.

In the battery module described above, in the cell holder, the drainage opening is provided in the side plate provided between the side walls of the outer case at both sides of the outer case. Therefore, the infiltrating water flowing into the drainage space is quickly drained to the outside of the cell holder.

The battery module according to still another aspect of the disclosure may include a circuit board disposed between the side plate and the outer case.

In the battery module according to still another embodiment of the disclosure, the cell holder may further include: a cell holder body including the holding portion, and a holding plate disposed in the drainage space, the holding plate has a plurality of apertures therein into which the plurality of battery cells are inserted so as to dispose the plurality of battery cells at the predetermined positions.

In the battery module according to still another aspect of the disclosure, the cell holder may have a drain hole passing through the holding portion in a downward direction, the drain hole configured to drain water in the drainage space through the drain hole.

The battery module described above has the drain hole passing vertically through the holding portion of the cell holder. Therefore, the infiltrating water flowing into the drainage space is efficiently drained to the outside of the cell holder through the drain hole.

In the battery module according to still another aspect of the disclosure, the plurality of battery cells may be cylindrical batteries. The insulative partition wall may be a curved plate extending along an outer circumferential surface of a cylindrical battery which is one battery cell of the two battery cells.

In the battery module according to still another aspect of the disclosure, a lateral width (W) of the insulative partition wall may be 1/2 or less and 1/10 or more of an outer circumference of the cylindrical battery.

In the battery module according to still another aspect of the disclosure, the plurality of battery cells may be cylindrical batteries including battery cases having surfaces exposed to outside of the plurality of battery cells.

In the battery module according to still another aspect of the disclosure, an interval between adjacent battery cells out of the plurality of battery cells disposed in the cell holder is 5 mm or less.

Examples of the disclosure will be detailed below with reference to the drawings. In the following description, terms indicating specific directions or positions (for example, "up", "down", and other terms including these terms) are used as necessary, and the use of these terms is to facilitate understanding of the disclosure with reference to the drawings. However, the technical scope of the invention is not limited by the meaning of these terms. In addition, portions denoted by the same reference numerals in a plurality of drawings indicate the same or equivalent portions or members. In addition, dimensions, materials, shapes, relative arrangements, and the like of components described below are intended to be shown without limiting the scope of the invention thereto unless otherwise specified. Sizes, positional relationships, and the like of members shown in the drawings may be exaggerated for clarity of description.

The battery module of the disclosure is suitable mainly for, e.g., an emergency power source or a power source for supplying electric power to a motor of an electric vehicle. However, the disclosure does not specify the use of the battery module, and can be used as a power source for various other electric devices.

### Exemplary Embodiment 1

A battery module according to the following embodiment can ensure high safety in various use environments. In particular, it is possible to ensure safety in a state where the battery module is submerged, which is a use environment in which it is difficult to ensure safety. The battery module becomes dangerous by being submerged in an environment, in which a fully charged battery cell is submerged in highly conductive water, for example, seawater, the seawater flows into the battery cell, and then water is drawn and the seawater is drained. In this use environment, the seawater flowing into the battery cell is not completely drained from the inside of an outer case. The seawater remaining in the outer case flows between battery cases of the battery cells having a potential difference, and the battery cases are electrically corroded. In the case of the electrically corroded battery cases, the seawater enters the battery cases, and positive and negative electrodes are short-circuited. Since the internal short circuit of the battery cell causes ignition, it is particularly difficult to ensure safety in this use environment.

An electric corrosion current that flows between the battery cases having a potential difference and dissolves the battery cases increases as the battery cases approach each other, and increases even when insulation resistance between the battery cases decreases. In recent years, since an increase of a density of the battery module becomes an important issue and a volume energy density is increased, an interval between the battery cases tends to be narrowed. Further, for a structure and the like in which component cost is reduced and lead wires are welded to the battery cases, a structure in which surfaces of the battery cases are not covered with heat-shrinkable tubes is also adopted. However, in the battery module having such a structure, the electric corrosion current is large, and an adverse effect due to the internal short circuit of the battery cells is larger.

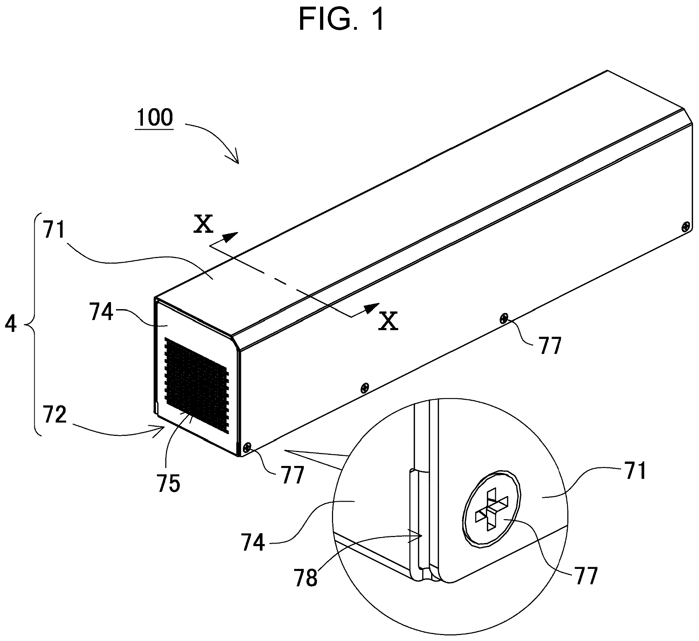

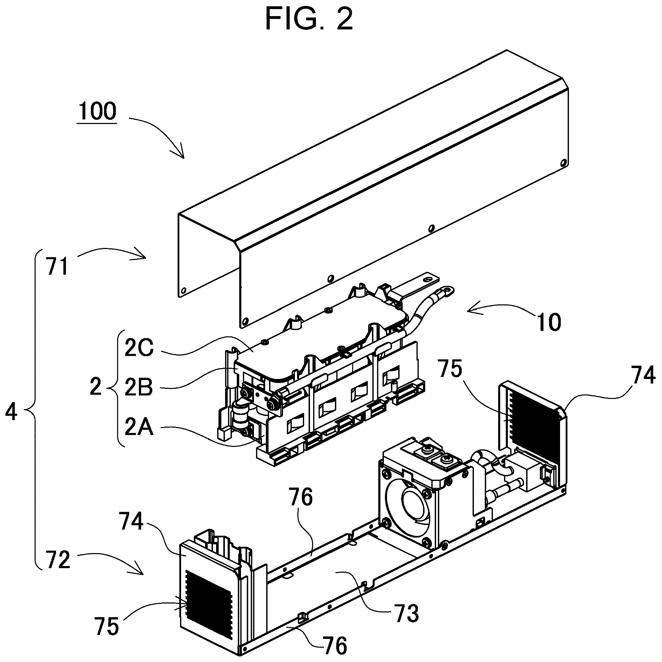

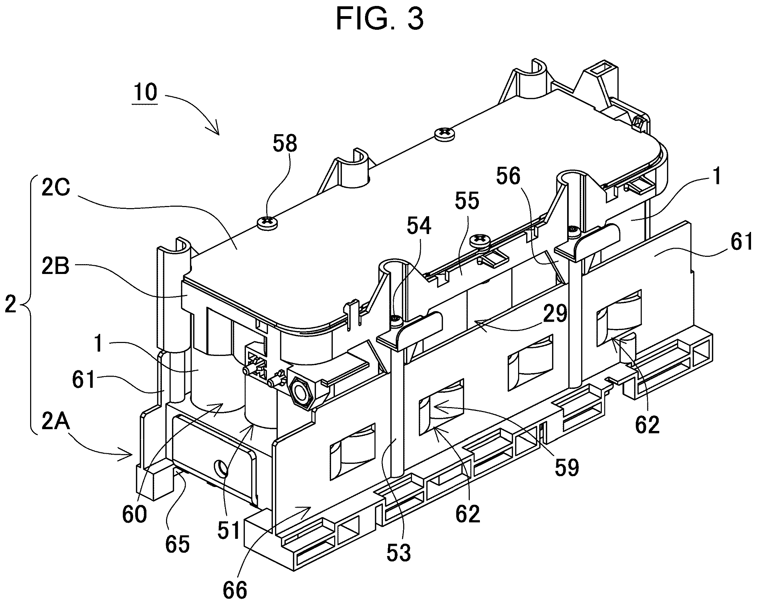

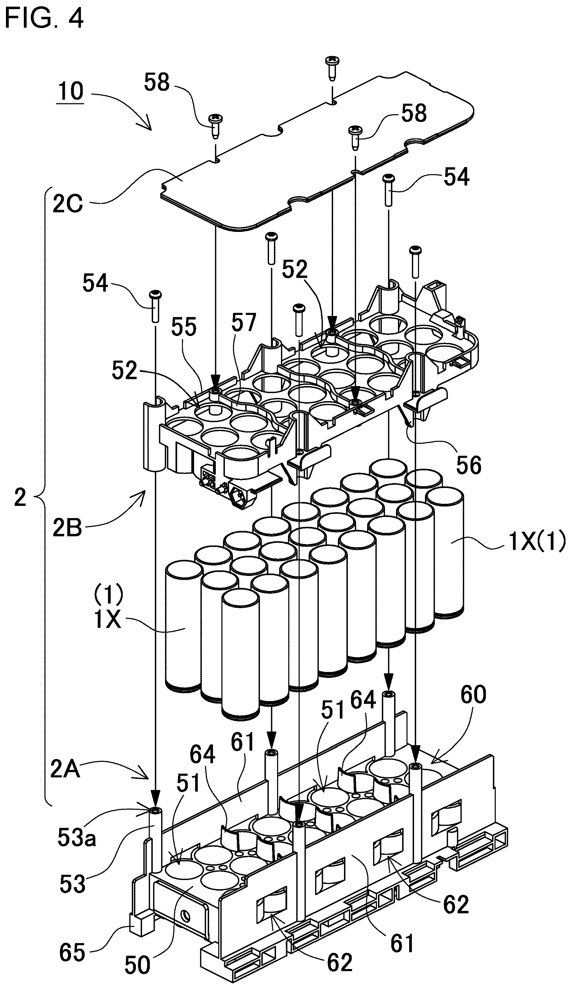

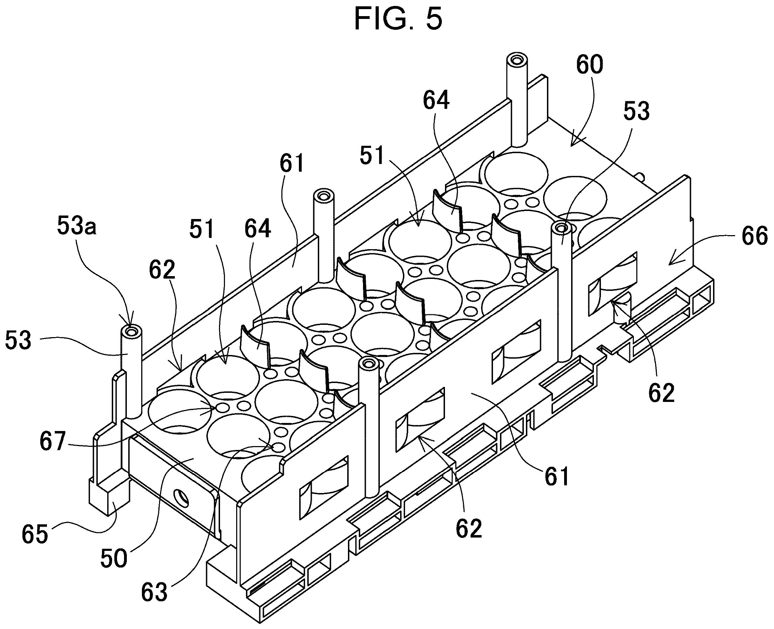

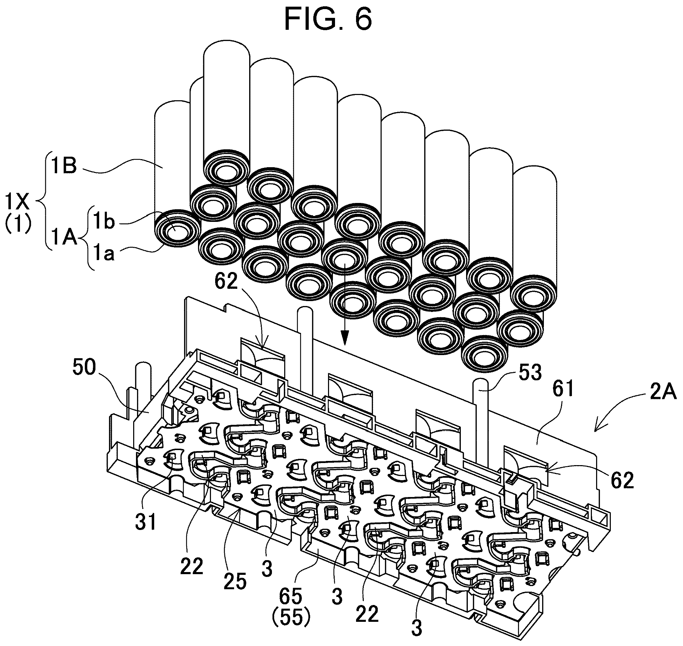

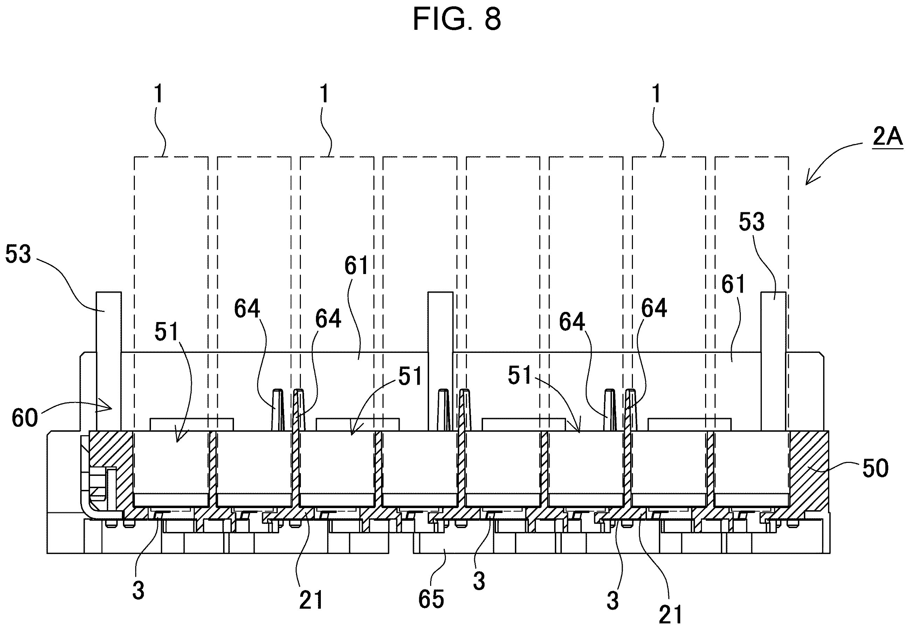

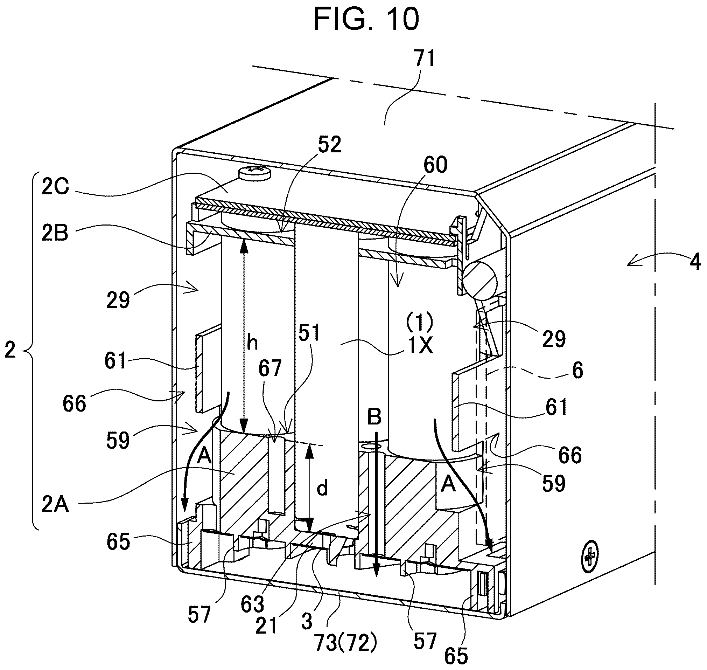

Battery module 100 shown in FIGS. 1 and 2 has the following structure in order to ensure safety caused by submergence. In battery module 100, battery cells 1 are disposed at predetermined positions in cell holder 2. Adjacent battery cells 1 are electrically connected to each other with lead plate 3 to form battery assembly 10. Battery assembly 10 is housed in outer case 4. FIGS. 3 and 4 are a perspective view and an exploded perspective view of battery assembly 10. FIGS. 5-9 are a perspective view, a back perspective view, a plan view, a vertical longitudinal sectional view, and a vertical cross-sectional view of cell holder body 2A of cell holder 2. FIG. 10 is a cross-sectional perspective view of the battery module. In cell holder 2, battery cells 1 are disposed parallel to one another and have respective electrode end surfaces 1A are flush with one another on the same plane. Electrode end surface 1A includes positive and negative electrodes. As shown in FIG. 6, in battery cell 1 of battery module 100, center electrode 1b and peripheral electrode 1a are provided on electrode end surface 1A. Center electrode 1b and peripheral electrode 1a are electrically connected to of lead plate 3 by welding connection lead 31 of lead plate 3 disposed to face electrode end surface 1A. In order to weld lead plate 3 to center electrode 1b and peripheral electrode 1a, battery cell 1 is not covered with a heat-shrinkable tube, and the surface of battery case 1B is exposed.

### Battery Assembly 10

In battery assembly 10 shown in FIGS. 3 and 4, battery cells 1 are inserted into cell holder 2, and battery cells 1 of cylindrical batteries 1X are disposed parallel to one another in multiple rows and columns parallel. Cell holder 2 is disposed such that lead plate 3 faces electrode end surface 1A of battery cell 1.

### Battery Cell 1

In battery cell 1, an opening of cylindrical battery case 1B having a closed bottom is hermetically closed with a sealing plate. Battery case 1B is molded to have a cylindrical shape by pressing a metal plate. The sealing plate hermetically seals the opening of battery case 1B via an insulating material (not shown). The sealing plate hermetically seals the opening of battery case 1B by crimping battery case 1B. Battery cell 1 is cylindrical battery 1X including the positive and negative electrodes provided on electrode end surface 1A. In cylindrical battery 1X described above, center electrode 1b is provided in a center portion of the sealing plate, and the positive and negative electrodes are provided on electrode end surface 1A with a peripheral edge of the opening of battery case 1B hermetically fixed by crimping the sealing plate as peripheral electrode 1a. In cylindrical battery 1X as battery cell 1, center electrode 1b and peripheral electrode 1a are provided on electrode end surface 1A without covering battery case 1B with an insulating film, such as a heat-shrinkable tube.

Safety of battery module 100 is ensured by being submerged in water without covering battery case 1B with the insulating material. Therefore, the positive and negative electrodes are provided on electrode end surface 1A, and positive and negative lead plates 3 are connected to one end surface of battery cell 1, accordingly enhancing space efficiency. Manufacturing cost of battery cell 1 is reduced by not using the heat-shrinkable tube, and further, the surface of battery case 1B is exposed to increase heat dissipation efficiency of battery cell 1. However, the battery module of the disclosure is not limited to a structure in which an insulating layer is not provided on a surface of a battery cell. A battery cell having an insulative surface may also be used to ensure higher safety.

As battery cell 1, a lithium ion secondary battery may be used. The lithium ion secondary battery has a large charge and discharge capacity with respect to a weight and a capacity. However, the disclosure may also be used without limiting battery cell 1 to a lithium ion battery. Secondary batteries, such as all-solid-state batteries, which are currently in use or will be developed in the future, may be used. In battery module 100 shown below, battery cell 1 is cylindrical battery 1X. However, battery cell 1 is not limited to cylindrical battery 1X, and a rectangular battery may be used. The number of battery cells 1 is determined to the optimum number in consideration of the use of the battery module, the charge and discharge capacity, a maximum load current, a capacity of each battery cell, and the like, and may range, for example, from 10 to 100. In battery assembly 10, the number of battery cells 1 connected in parallel is increased to increase the maximum current supplied to the load. The total number may be increased to increase the total charge and discharge capacity. In battery module 100 shown in FIG. 2, as shown in FIG. 4, all battery cells 1 are disposed parallel to one another, and electrode end surfaces 1A are flush with one another. Two or more battery cells may be arranged along a straight line in a longitudinal direction and connected in series to one another to form a composite battery cell, and the composite battery cell may be disposed parallel to one another while the electrode end surfaces of the composite battery cell are flush with one another.

### Cell Holder 2

Cell holder 2 may be made of an insulative thermoplastic plastic. Cell holder 2 shown in FIGS. 3-9 includes cell holder body 2A in which battery cell 1 and lead plate 3 are disposed at the predetermined positions, holding plate 2B connected to cell holder body 2A, and cover plate 2C closing a surface of holding plate 2B.

Cell holder body 2A shown in FIGS. 3-9 holding portion 50, side plates 61, and surface plates 21 which are unitarily molded. An end portion (lower portion in the drawing) of each battery cell 1 is inserted into holding portion 50 to dispose the battery cell at the predetermined position. Side plates 61 are provided along both side edges of holding portion 50 and are disposed with gap 66 inside outer case 4. Surface plates 21 are connected to lower end portions of holding portions 50. Lead plate 3 is disposed on a surface of surface plate 21. Holding portion 50 shown in the drawing includes battery insertion portion 51 into which the lower portion of battery cell 1 is inserted and disposed at the predetermined position. Battery insertion portion 51 has an inner shape along an outer circumferential surface of battery cell 1. Cylindrical battery 1X is inserted into battery insertion portion 51 and is disposed at the predetermined position. Battery insertion portion 51 has the inner shape that is substantially equal to an outer shape of cylindrical battery 1X, so that cylindrical battery 1X may be smoothly inserted without any gap. Further, a depth of battery insertion portion 51 determines a length along which battery cell 1 is held. Battery insertion portion 51 extends from an upper surface to the bottom of holding portion 50 and is determined by a vertical dimension of holding portion 50. In cell holder body 2A shown in the drawing, a height of holding portion 50, that is, depth (d) of battery insertion portion 51 is about 1/3 of the overall length of cylindrical battery 1X, and drainage space 60 is provided between holding portion 50 and holding plate 2B. The surface of battery cell 1 is exposed to drainage space 60.

As shown in FIG. 10, a part of battery cell 1 is inserted into battery insertion portion 51, and a part of battery cell 1 is exposed to drainage space 60. In cell holder 2, vertical width (h) of drainage space 60 and depth (d) of battery insertion portion 51 may be adjusted by adjusting a ratio of vertical dimensions, that is, a ratio of heights of holding portion 50 and drainage space 60. Cell holder body 2A quickly drains water that has infiltrated by increasing the height of drainage space 60, and stably holds battery cell 1 by increasing a depth of battery insertion portion 51. The ratio of the height of drainage space 60 to the height of holding portion 50 is a ratio at which the infiltrating water is quickly drained while battery cell 1 are stably held. Battery insertion portion 51 stably holds battery cell 1 by inserting a half or less of battery cell 1. Battery insertion portion 51 may preferably have a structure in which vertical width (h) of drainage space 60 is larger than depth (d) of holding portion 50 so as to drain the infiltrating water quickly.

Battery module 100 shown in FIGS. 1 and 2 includes outside air-blowing windows 75 provided at both ends of outer case 4. Battery module 100 cools battery cell 1 by forcibly blowing, to drainage space 60, cooling air flowing from air-blowing windows 75. Battery module 100 efficiently cools battery cell 1 exposed to drainage space 60 in combination with a cooling duct.

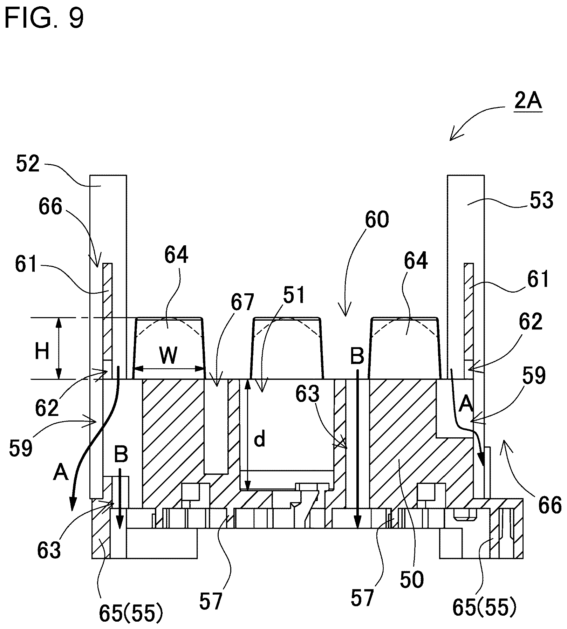

In cell holder body 2A shown in FIGS. 3-9, side plates 61 extending vertically along side edges of holding portion 50 are unitarily molded. A lower end edge of side plate 61 is connected unitarily to the upper surface of holding portion 50. Cooling gap 29 is provided between holding plate 2B and an upper edge of side plate 61. Side plate 61 has drainage opening 62 configured to drain the infiltrating water in drainage space 60 through drainage opening 62 to the inside of outer case 4. As shown in FIGS. 9 and 10, drainage opening 62 is opened at a position corresponding to valley 59 on a side surface of holding portion 50 to quickly drain the infiltrating water in drainage space 60. Side surfaces of holding portion 50 on both sides of holding portion 50 are curved surfaces along the cylindrical shape of battery cell 1, and valley 59 is formed between adjacent battery cells 1. Drainage opening 62 is opened at a position facing valley 59, and allows the infiltrating water on the upper surface of holding portion 50 to flow from valley 59 to drainage opening 62 to be quickly drained.

As shown in FIG. 10, gap 66 is provided between side plate 61 and the inner surface of outer case 4, and circuit board 6 connected to battery cell 1 is disposed in gap 66. Circuit board 6 is fixed to a surface of side plate 61 facing outer case 4. An electronic component, such as a protection circuit for controlling a charge and discharge current of battery cell 1, may be mounted on circuit board 6.

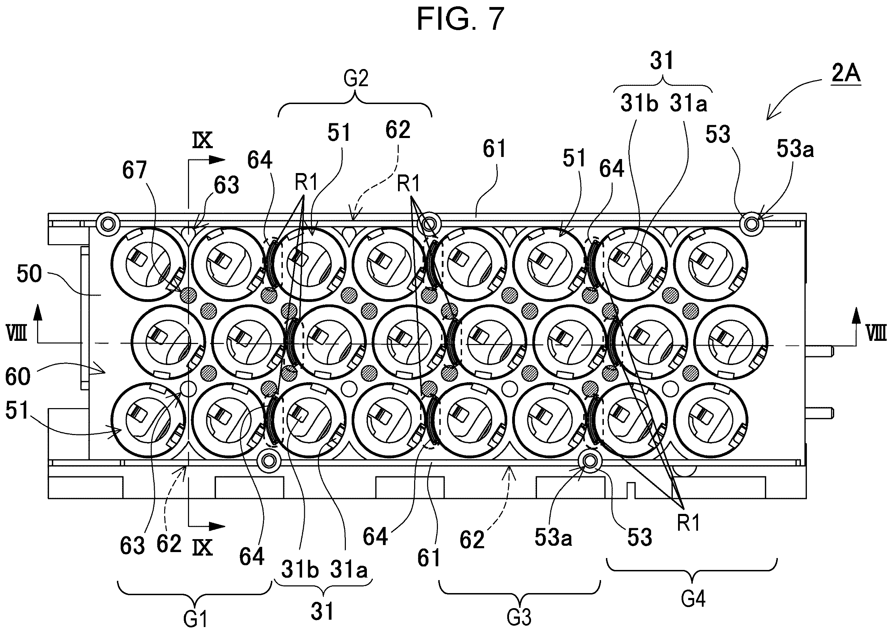

Holding portion 50 has drain holes 63 penetrating from the upper surface of holding portion 50 to the lower surface of holding portion 50. Drain holes 63 are configured to drain water in drainage space 60 through drain holes 63. Holding portion 50 having drain holes 63 therein quickly drain the infiltrating water on the upper surface, thereby quickly preventing adverse effects of remaining water. In cell holder body 2A shown in the plan view of FIG. 7, drain holes 63 are provided around battery insertion portion 51, and quicky drain the infiltrating water flowing into drainage space 60 on the upper surface of holding portion 50. The infiltrating water drained from drain holes 63 is drained to the lower surface of holding portion 50. Lead plates 3 disposed on the lower surface of cell holder body 2A allow an opening of a lower end of drain hole 63 to be opened in a region excluding a space between lead plates 3 having a potential difference such that the infiltrating water drained from drain hole 63 is not drained between lead plates 3 having a potential difference.

In cell holder body 2A shown in the drawing, holding portion 50 located between battery cells 1 adjacent to each other has lightening holes 67 formed during resin molding. Lightening holes 67 of holding portion 50 are provided at portions between battery cells 1 adjacent to each other and having a large thickness. As shown in FIG. 9, drain hole 63 is an aperture passing through holding portion 50. Lightening hole 67 is drilled to a predetermined depth and does not pass through holding portion 50. Lightening hole 67 provides battery insertion portion 51 formed in holding portion 50 accurately. In cell holder body 2A shown in FIG. 7, drain hole 63 opened in holding portion 50 is drilled in the same inner shape as lightening hole 67, and functions as lightening hole 67. In FIG. 7, lightening hole 67 are indicated by hatching for easily distinguishing drain hole 63 from lightening hole 67.

In cell holder body 2A shown in FIGS. 5-9, insulative partition wall 64 is provided between battery cells 1 having a potential difference between the cells. In according to the embodiment, battery cells 1 are divided into four groups G1-G4 each including six battery cells 1. Six battery cells 1 in one group are connected in parallel to one another to virtually constitute one battery, and no potential difference occurs therebetween. The virtual batteries of groups G1 to G4 are connected in series to one another. Accordingly, a potential difference occurs between battery cases 1B of battery cells 1 of different groups. Insulative partition wall 64 protrudes upward from the surface of holding portion 50 and is formed unitarily with holding portion 50. As shown in FIG. 7, battery cells 1 having a potential difference between the cells face each other via facing region R1. Insulative partition wall 64 is a curved plate along the circumference of one of battery cells 1, and does not have a tubular shape that surrounds the entire circumference of battery cell 1, but has lateral width (W) that is disposed in facing region R1 where battery cells 1 having a potential difference face each other. In accordance with the embodiment, insulative partition wall 64 does not have a portion located out of facing region R1. Insulative partition wall 64 is not disposed in a region excluding facing region R1 between cylindrical batteries 1X, and has a structure configured to drain the infiltrating water between insulative partition wall 64 and cylindrical battery 1X from drainage opening 62. The upper surface of holding portion 50 where insulative partition wall 64 is not disposed is a horizontal flat surface, and the infiltrating water on the upper surface of holding portion 50 is drained from drainage opening 62 and drain hole 63.

Insulative partition wall 64 prevents an electric corrosion current flowing in a region where battery cells 1 having a potential difference are close to each other. In holding portion 50 in a comparative example which does not include insulative partition wall 64, battery cells 1 having a potential difference are close to each other in facing region R1, and provide a small leakage resistance between battery cells 1, accordingly increasing the electric corrosion current. The electric corrosion current flowing between battery cells 1 causes electric corrosion of battery cases 1B of battery cells 1. In electrically corroded battery cells 1, the water infiltrating battery cells 1 short-circuits between positive and negative electrodes disposed approach each other, so that an excessive short current flows and causes thermal runaway.

Insulative partition wall 64 blocks the electric corrosion current due to the infiltrating water remaining on holding portion 50 to prevent the electric corrosion of battery case 1B. Since the electric corrosion current flows concentratedly in a region between cells close to each other, insulative partition wall 64 is disposed in the region. If insulative partition wall 64 has a tubular shape surrounding the entire circumference of battery cell 1, the infiltrating water between battery cell 1 and tubular insulative partition wall 64 does not be drained completely. Insulative partition wall 64 is not disposed on the entire circumference of battery cell 1, but is disposed only in facing region R1. Holding portion 50 has a flat shape in a region on which insulative partition wall 64 is not disposed. Lateral width (W) of insulative partition wall 64 disposed in facing region R1 is, for example, 1/2 or less of the outer periphery of cylindrical battery 1X. Excessively small lateral width (W) of insulative partition wall 64 may increase the electric corrosion current flowing on both sides of facing region R1, so that lateral width (W) of insulative partition wall 64 is preferably 1/10 or more of the outer periphery of cylindrical battery 1X, thereby preventing electric corrosion of battery case 1B caused by the electric corrosion current. Cell holder body 2A described above quickly drains the infiltrating water on holding portion 50 from drainage opening 62, and further blocks the electric corrosion current caused by the infiltrating water in facing region R1 of battery cells 1 having a potential difference to prevent the electric corrosion of battery case 1B.

Insulative partition wall 64 preferably has height (H) allowing a position of an upper end edge of insulative partition wall 64 is higher than an upper end opening edge of drainage opening 62. In this structure, when battery module 100 is submerged in water and a large amount of water enters cell holder 2 while the water is drained to the height of the upper end opening edge of drainage opening 62, an upper portion of insulative partition wall 64 protrudes to above the water surface of the water in which battery module 100 is submerged. This configuration effectively prevents current from flowing over the shortest distance between battery cells 1 having a voltage difference. Further, as shown by a chain line in FIG. 9, an upper end portion of insulative partition wall 64 may have a shape convex at a center thereof. Insulative partition wall 64 having the center convex shape has a mountain shape in a front view or has a shape curved in a center convex shape. Therefore, water effectively flows down along an inclined upper surface to effectively prevent water from remaining on the upper surface.

In cell holder 2 described above, an interval between battery cells 1 having a potential difference disposed adjacent to each other is 5 mm or less, thereby preventing the electric corrosion of battery case 1B caused by the electric corrosion current. Battery module 100 described above prevents the electric corrosion of battery case 1B while the interval of 1.45 mm between battery cells 1 is extremely close to each other. Since a lot of battery cells 1 are disposed by narrowing the interval between battery cells 1 while ensuring safety, the above excellent characteristics can achieve high safety while reducing the size of entire battery module 100.

### Outer Case 4

Outer case 4 is not sealed in a watertight structure, thus having a gap through which water infiltrates. Outer case 4 shown in FIG. 2 includes main case 71 which is formed by pressing a metal plate into a gutter shape, and bottom case 72 which closes a bottom surface of main case 71 and openings of both end surfaces. Bottom case 72 shown in the figure includes a pair of end surface plates 74 that close both ends of main case 71 at both ends of bottom plate portion 73. End surface plates 74 include air-blowing windows 75. Bottom case 72 further includes bending flanges 76 to be connected to main case 71 around bottom case 72. Bending flange 76 overlaps on the inside of main case 71 and fixed to main case 71 with locking screw 77. As shown in a partially enlarged view of FIG. 1, outer case 4 has gap 78 through which water infiltrates the overlapping portion of main case 71 and bottom case 72. When battery module 100 including outer case 4 which does not have a watertight structure is submerged in water, water infiltrates battery module 100. The cross-sectional view of FIG. 9 and the cross-sectional perspective view of FIG. 10 show paths through which the infiltrating water is drained by arrow A and arrow B. Arrow A indicates the infiltrating water on holding portion 50 drained from drainage opening 62 of side plate 61 to the bottom of outer case 4. Arrow B indicates water on holding portion 50 passing through drain hole 63 and flowing down to the bottom of outer case 4. The infiltrating water drained to the bottom of outer case 4 passes through gap 78 of outer case 4 and is drained to the outside. In outer case 4 which does not have a watertight structure, as long as the bottom portion of outer case 4 does not have a sealed structure, gap 78 through which water is drained is formed in the bottom of outer case 4. Therefore, water that flows down to the bottom portion along the paths of arrow A and arrow B is drained to the outside through gap 78.

Battery module 100 shown in FIG. 10 includes spacer rib 65 protruding from a lower surface of cell holder 2. Spacer rib 65 allows lead plate 3 disposed on the bottom surface of cell holder 2 to be located away from the bottom surface of outer case 4. Lead plates 3 disposed here prevents lead plates 3 having a potential difference from being short-circuited by the infiltrating water by allowing lead plates 3 to be located away from the infiltrating water remaining in the bottom of outer case 4.

Battery module 100 which is submerged in water and ensures safety importantly drains water infiltrating battery module 100 and prevents the electric corrosion of battery cases 1B which is caused by the electric corrosion current flowing between battery cells 1 having a potential difference. As compared with a state where battery module 100 is held in a submergence state, it is difficult to ensure safety in a state where battery module 100 is placed after being submerged in water such that battery module 100 is taken out from water, and a part of water is drained from the inside. This is because, in the submergence state, conductive water gradually discharges the entire battery cell to reduce energy, but in a state where a part of the water is drained and a part of the water remains, the remaining water damages battery case 1B of battery cell 1 due to electric corrosion, the water infiltrates the inside, and causes an internal short circuit.

In battery module 100 including outer case 4 which does not have a watertight structure, a part of the water is drained when the water is drawn after battery module 100 is submerged in water, but another part of the water remains and causes the electric corrosion of battery cells 1. A period of time corresponding to several days or more is required until battery cases 1B of battery cells 1 are electrically corroded and an internal short-circuit occurs. Accordingly, since the electric corrosion of battery cases 1B of battery cells 1 occurs in a state where almost all the infiltrating water in outer case 4 is drained, the electric corrosion of battery cases 1B occurs in a state where almost all the infiltrating water that has entered the bottom portion of outer case 4 is drained. Therefore, in battery module 100 including outer case 4 which does not have a watertight structure, for example, when water is drawn after battery module 100 is submerged in water and 24 hours have elapsed, almost all the infiltrating water of outer case 4 is drained, and a part of water remains in the bottom portion. In the conventional battery module, since electric corrosion of the battery case occurs in this state, the battery module is required to reduce the electric corrosion current between the battery cells having a potential difference in a state where slight water remains in the bottom portion of the outer case. In a state where almost all the infiltrating water is drained, the water remaining on the bottom portion of outer case 4 does not cause the electric corrosion of battery cases 1B. Accordingly, as lead plates 3 are located slightly away from the bottom of outer case 4, the infiltrating water remaining on the bottom does not flow between lead plates 3 having a potential difference, and no current flows.

In cell holder 2 shown in FIGS. 3 and 4, holding plate 2B is connected to cell holder body 2A, and battery cell 1 is disposed at the predetermined position by cell holder body 2A and holding plate 2B. In cell holder body 2A, battery cell 1 is inserted into tubular battery insertion portion 51 and disposed at the predetermined position. In holding plate 2B, battery cell 1 is inserted into through hole 52 and disposed at the predetermined position. Holding plate 2B is connected to cell holder body 2A, and disposes battery cell 1 at the predetermined position. Holding plate 2B has through holes 52 into which end portions of cylindrical batteries 1X are inserted. The inner shape of through hole 52 is substantially equal to the outer shape of cylindrical battery 1X, and inserted cylindrical battery 1X is disposed at the predetermined position without positional deviation. Holding plate 2B is connected to cell holder body 2A in a state where cylindrical battery 1X is inserted into battery insertion portion 51 of cell holder body 2A, and battery cell 1 is disposed in tubular battery insertion portion 51 of cell holder body 2A and through hole 52 of holding plate 2B. Cover plate 2C is fixed to an outer surface of holding plate 2B. Cover plate 2C disposes the bottom surface of cylindrical battery 1X, that is, the bottom surface on the side opposite electrode end surface 1A.

Cell holder body 2A shown in FIG. 4 includes connection tube 53 connecting holding plate 2B to cell holder body 2A unitarily with connection tube 53. Connection tube 53 protrudes from holding portion 50 vertically toward holding plate 2B. Cell holder body 2A includes connection tubes 53 at predetermined intervals along an outer peripheral edge of holding portion 50. Connection tube 53 has female threaded hole 53a in an upper end surface thereof in the figure. Locking screw 54 screwed into female threaded hole 53a is screwed to penetrate holding plate 2B, and holding plate 2B is connected to cell holder body 2A. Holding plate 2B includes outer peripheral wall 55 at a periphery of holding plate 2B. Outer peripheral wall 55 includes spacer rib 56 protruding downward. Spacer rib 56 provides cooling gap 29 between outer peripheral wall 55 of holding plate 2B and side plate 61 of cell holder body 2A. Cell holder 2 allows battery cell 1 to be cooled by blowing air to cooling gap 29.

In cell holder 2, cover plate 2C is fixed to holding plate 2B. Cover plate 2C is fixed to holding plate 2B with locking screw 58. Locking screw 58 is screwed into a threaded hole provided along outer peripheral wall 55 of holding plate 2B and in an inner side of outer peripheral wall 55 to fix cover plate 2C to holding plate 2B. Cover plate 2C is located away from the surface of holding plate 2B and supports the end surface of cylindrical battery 1X inserted into through hole 52 of holding plate 2B. Accordingly, cover plate 2C holds the bottom surfaces of cylindrical batteries 1X while allowing the surfaces to be flush with one another. Holding plate 2B is unitarily formed with partition ribs 57 protruding toward an inner surface of cover plate 2C. Partition ribs 57 insulates adjacent battery cells 1 having a potential difference from each other. In this structure, cylindrical battery 1X having a potential in exposed battery case 1B is used. Cylindrical batteries 1X may be close to each other with a potential difference, and partition ribs 57 may be provided between cylindrical batteries 1X to ensure insulation.

In cell holder 2 in which battery cells 1 are disposed at the predetermined positions, lead plates 3 are disposed at the predetermined positions, thereby preventing relative positional deviation of lead plates 3 with respect to battery cells 1, and allows connection leads 31 of lead plates 3 to be accurately disposed at positions facing electrodes of battery cells 1. In cell holder 2 shown in FIG. 6, lead plates 3 are disposed on an outer surface of surface plate 21 of cell holder body 2A. In surface plate 21, lead plates 3 are located away from each other in the longitudinal direction, and between adjacent lead plates 3, peripheral edge ribs 22 are unitarily molded for disposing lead plates 3 (outer peripheral edge thereof) on the inner side. Peripheral edge ribs 22 are located between adjacent lead plates 3, and may also be used in combination with insulating ribs between adjacent lead plates 3.

### Lead Plate 3

As shown in FIG. 6, lead plate 3 is disposed on outer peripheral wall 55 of cell holder 2 and fitting recess 25 on the inner side of peripheral edge rib 22, and is connected to battery cell 1. Lead plate 3 includes connection leads 31 to be welded to the positive and negative electrodes of battery cell 1. Connection lead 31 is connected to the electrode of battery cell 1 by welding a welding portion at a tip end of connection lead 31 to the electrode of battery cell 1. The welding may be laser welding, spot welding, ultrasonic welding, and the like. A metal plate having large electrical conductivity and thermal conductivity is used as lead plate 3. For example, as lead plate 3, a metal plate, such as an iron plate, a nickel plate, a copper plate, or an aluminum plate in which a surface is plated with nickel and the like, can be suitably used.

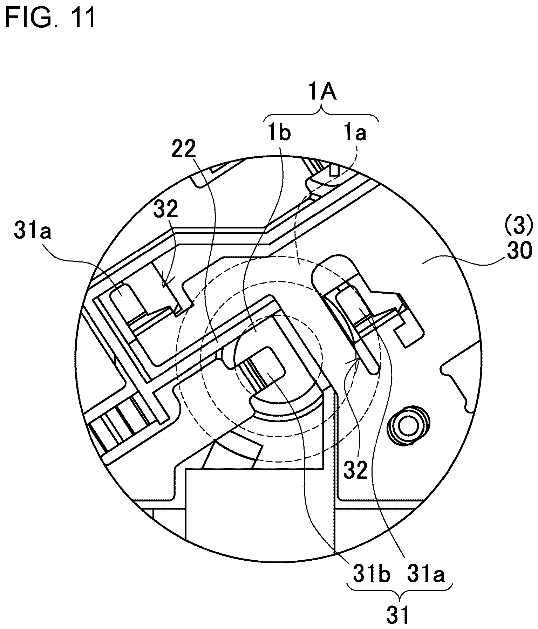

Lead plate 3 in ludes connection lead 31 to be welded to the electrode. Connection lead 31 is disposed at a position facing the electrode of battery cell 1 and welded to the electrode. One lead plate 3 includes connection leads 31 to be connected to battery cells 1. Lead plate 3 shown in FIG. 6 includes connection leads 31 by cutting a part of the metal plate. In lead plate 3, as shown in an enlarged plan view of FIG. 11, slit 32 is provided between connection lead 31 and main plate portion 30 with a plate shape, separates connection lead 31 from main plate portion 30, and has a rear end of connection lead 31 connected to main plate portion 30. Connection lead 31 has an arm shape extending from main plate portion 30 toward a tip end of connection lead 31, and has the tip end as a welding portion. Lead plate 3 includes second connection lead 31b connected to center electrode 1b of the battery cell, and first connection lead 31a connected to peripheral electrode 1a. Second connection lead 31b extends in a radial direction of cylindrical battery 1X, and first connection lead 31a extends in a tangential direction of circular peripheral electrode 1a provided on the outer periphery of cylindrical battery 1X. In lead plate 3 shown in FIG. 11, first connection lead 31a and second connection lead 31b extend perpendicular to each other. First connection lead 31a extends in the tangential direction of cylindrical battery 1X, and second connection lead 31b extends in the radial direction of cylindrical battery 1X.

### INDUSTRIAL APPLICABILITY

A battery module according to the disclosure is an electric device driven by a battery such as an assist bicycle, an electric motorcycle, an electric wheelchair, an electric cart, a cleaner, and an electric tool. The battery module can be suitably used as a chargeable and dischargeable battery module for devices used particularly outdoors.

### REFERENCE MARKS IN DRAWINGS

- 100: battery module
- 1: battery cell
- 1X: cylindrical battery
- 1A: electrode end surface
- 1B: battery case
- 1a: peripheral electrode
- 1b: center electrode
- 2: cell holder
- 2A: cell holder body
- 2B: holding plate
- 2C: cover plate
- 3: lead plate
- 4: outer case
- 6: circuit board
- 10: battery assembly
- 21: surface plate
- 22: peripheral edge rib
- 25: fitting recess
- 29: cooling gap
- 30: main plate portion
- 31: connection lead
- 31a: first connection lead
- 31b: second connection lead
- 32: slit
- 50: holding portion
- 51: battery insertion portion
- 52: through hole
- 53: connection tube
- 53a: female screw hole
- 54: locking screw
- 55: outer peripheral wall
- 56: spacer rib
- 57: partition rib
- 58: locking screw
- 59: valley
- 60: drainage space
- 61: side plate
- 62: drainage opening
- 63: drain hole
- 64: insulative partition wall
- 65: spacer rib
- 66: gap
- 71: main case
- 72: bottom case
- 73: bottom plate portion
- 74: end surface plate
- 75: air-blowing window
- 76: bending flange
- 77: locking screw
- 78: gap
- R1: facing region

## Claims

1. A battery module (100) comprising:
a plurality of battery cells (1);
a cell holder (2) disposing the plurality of battery cells at predetermined positions; and
an outer case (4) accommodating the plurality of battery cells and the cell holder therein,
wherein
the cell holder includes:
a holding portion (50) into which lower portions of the plurality of battery cells are inserted to dispose the plurality of battery cells at the predetermined positions;
a drainage space (60) exposing the plurality of battery cells above the holding portion through the drainage space;
a drainage opening (62) configured to drain water flowing into the drainage space through the drainage opening; and
an insulative partition wall (64) disposed in the drainage space, the insulative partition wall protruding upward from a surface of the holding portion,
two battery cells out of the plurality of battery cells having a potential difference between the two battery cells face each other across a facing region, and
the insulative partition wall is located in the facing region.

2. The battery module according to claim 1, wherein
the cell holder further includes a side plate made of an insulating material between side walls of the outer case provided at both sides of the outer case, and
the side plate has the drainage opening configured to drain water in the drainage space.

3. The battery module according to claim 2, further comprising a circuit board disposed between the side plate and the outer case.

4. The battery module according to any one of claims 1 to 3, wherein the cell holder further includes:
a cell holder body including the holding portion, and
a holding plate disposed in the drainage space, the holding plate has a plurality of apertures therein into which the plurality of battery cells are inserted so as to dispose the plurality of battery cells at the predetermined positions.

5. The battery module according to any one of claims 1 to 4, wherein the cell holder has a drain hole passing through the holding portion in a downward direction, the drain hole configured to drain water in the drainage space through the drain hole.

6. The battery module according to any one of claims 1 to 5, wherein
the plurality of battery cells are cylindrical batteries, and
the insulative partition wall is a curved plate extending along an outer circumferential surface of a cylindrical battery which is one battery cell of the two battery cells.

7. The battery module according to claim 6, wherein a lateral width of the insulative partition wall is 1/2 or less and 1/10 or more of an outer circumference of the cylindrical battery.

8. The battery module according to any one of claims 1 to 7, wherein the plurality of battery cells are cylindrical batteries including battery cases having surfaces exposed to outside of the plurality of battery cells.

9. The battery module according to any one of claims 1 to 8, wherein an interval between adjacent battery cells out of the plurality of battery cells disposed in the cell holder is 5 mm or less.

## Patentansprüche

1. Batteriemodul (100), umfassend:
eine Mehrzahl von Batteriezellen (1);
einen Zellenhalter (2), der die Mehrzahl von Batteriezellen an vorbestimmten Positionen anordnet; und
ein Außengehäuse (4), das die Mehrzahl von Batteriezellen und den Zellenhalter darin aufnimmt,
wobei
der Zellenhalter umfasst:
einen Halteabschnitt (50), in den untere Abschnitte der Mehrzahl von Batteriezellen eingesetzt sind, um die Mehrzahl von Batteriezellen an den vorbestimmten Positionen anzuordnen;
einen Entwässerungsraum (60), der die Mehrzahl von Batteriezellen oberhalb des Halteabschnitts durch den Entwässerungsraum freilegt;
eine Entwässerungsöffnung (62), die dazu konfiguriert ist, in den Entwässerungsraum strömendes Wasser durch die Entwässerungsöffnung abzuleiten; und
eine isolierende Trennwand (64), die in dem Entwässerungsraum angeordnet ist, wobei die isolierende Trennwand von einer Oberfläche des Halteabschnitts nach oben vorsteht,
wobei zwei Batteriezellen aus der Mehrzahl von Batteriezellen, die eine Potentialdifferenz zwischen den zwei Batteriezellen aufweisen, einander über einen einander zugewandten Bereich zugewandt sind, und
die isolierende Trennwand in dem einander zugewandten Bereich angeordnet ist.

2. Batteriemodul nach Anspruch 1, wobei
der Zellenhalter ferner eine aus einem isolierenden Material hergestellte Seitenplatte zwischen Seitenwänden des Außengehäuses, die an beiden Seiten des Außengehäuses vorgesehen sind, umfasst, und
die Seitenplatte die Entwässerungsöffnung aufweist, die dazu konfiguriert ist, Wasser in dem Entwässerungsraum abzuleiten.

3. Batteriemodul nach Anspruch 2, ferner umfassend eine Leiterplatte, die zwischen der Seitenplatte und dem Außengehäuse angeordnet ist.

4. Batteriemodul nach einem der Ansprüche 1 bis 3, wobei der Zellenhalter ferner umfasst:
einen Zellenhalterkörper, der den Halteabschnitt umfasst, und
eine Halteplatte, die in dem Entwässerungsraum angeordnet ist, wobei die Halteplatte eine Mehrzahl von Durchbrechungen darin aufweist, in die die Mehrzahl von Batteriezellen eingesetzt sind, um die Mehrzahl von Batteriezellen an den vorbestimmten Positionen anzuordnen.

5. Batteriemodul nach einem der Ansprüche 1 bis 4, wobei der Zellenhalter ein Ablaufloch aufweist, das den Halteabschnitt in einer Abwärtsrichtung durchsetzt, wobei das Ablaufloch dazu konfiguriert ist, Wasser in dem Entwässerungsraum durch das Ablaufloch abzuleiten.

6. Batteriemodul nach einem der Ansprüche 1 bis 5, wobei
die Mehrzahl von Batteriezellen zylindrische Batterien sind, und
die isolierende Trennwand eine gekrümmte Platte ist, die sich entlang einer äußeren Umfangsfläche einer zylindrischen Batterie erstreckt, die eine Batteriezelle der zwei Batteriezellen ist.

7. Batteriemodul nach Anspruch 6, wobei eine seitliche Breite der isolierenden Trennwand 1/2 oder weniger und 1/10 oder mehr eines äußeren Umfangs der zylindrischen Batterie beträgt.

8. Batteriemodul nach einem der Ansprüche 1 bis 7, wobei die Mehrzahl von Batteriezellen zylindrische Batterien sind, die Batteriegehäuse umfassen, die Oberflächen aufweisen, die zur Außenseite der Mehrzahl von Batteriezellen freigelegt sind.

9. Batteriemodul nach einem der Ansprüche 1 bis 8, wobei ein Abstand zwischen benachbarten Batteriezellen aus der Mehrzahl von Batteriezellen, die in dem Zellenhalter angeordnet sind, 5 mm oder weniger beträgt.

## Revendications

1. Module de batterie (100) comprenant :
une pluralité de cellules de batterie (1) ;
un support de cellules (2) disposant la pluralité de cellules de batterie à des positions prédéterminées ; et
un boîtier extérieur (4) logeant la pluralité de cellules de batterie et le support de cellules à l'intérieur de celui-ci,
dans lequel
le support de cellules comprend :
une partie de maintien (50) dans laquelle des parties inférieures de la pluralité de cellules de batterie sont insérées pour disposer la pluralité de cellules de batterie aux positions prédéterminées ;
un espace de drainage (60) exposant la pluralité de cellules de batterie au-dessus de la partie de maintien à travers l'espace de drainage ;
une ouverture de drainage (62) configurée pour drainer l'eau s'écoulant dans l'espace de drainage à travers l'ouverture de drainage ; et
une paroi de séparation isolante (64) disposée dans l'espace de drainage, la paroi de séparation isolante faisant saillie vers le haut à partir d'une surface de la partie de maintien,
deux cellules de batterie parmi la pluralité de cellules de batterie présentant une différence de potentiel entre les deux cellules de batterie se faisant face à travers une région en regard, et
la paroi de séparation isolante est située dans la région en regard.

2. Module de batterie selon la revendication 1, dans lequel
le support de cellules comprend en outre une plaque latérale faite d'un matériau isolant entre des parois latérales du boîtier extérieur prévues des deux côtés du boîtier extérieur, et
la plaque latérale présente l'ouverture de drainage configurée pour drainer l'eau dans l'espace de drainage.

3. Module de batterie selon la revendication 2, comprenant en outre une carte de circuit disposée entre la plaque latérale et le boîtier extérieur.

4. Module de batterie selon l'une quelconque des revendications 1 à 3, dans lequel le support de cellules comprend en outre :
un corps de support de cellules comprenant la partie de maintien, et
une plaque de maintien disposée dans l'espace de drainage, la plaque de maintien présentant une pluralité d'ouvertures dans celle-ci dans lesquelles la pluralité de cellules de batterie sont insérées de manière à disposer la pluralité de cellules de batterie aux positions prédéterminées.

5. Module de batterie selon l'une quelconque des revendications 1 à 4, dans lequel le support de cellules présente un trou de drainage traversant la partie de maintien dans une direction vers le bas, le trou de drainage étant configuré pour drainer l'eau dans l'espace de drainage à travers le trou de drainage.

6. Module de batterie selon l'une quelconque des revendications 1 à 5, dans lequel la pluralité de cellules de batterie sont des batteries cylindriques, et
la paroi de séparation isolante est une plaque incurvée s'étendant le long d'une surface circonférentielle extérieure d'une batterie cylindrique qui est une cellule de batterie des deux cellules de batterie.

7. Module de batterie selon la revendication 6, dans lequel une largeur latérale de la paroi de séparation isolante est de 1/2 ou moins et de 1/10 ou plus d'une circonférence extérieure de la batterie cylindrique.

8. Module de batterie selon l'une quelconque des revendications 1 à 7, dans lequel la pluralité de cellules de batterie sont des batteries cylindriques comprenant des boîtiers de batterie ayant des surfaces exposées vers l'extérieur de la pluralité de cellules de batterie.

9. Module de batterie selon l'une quelconque des revendications 1 à 8, dans lequel un intervalle entre des cellules de batterie adjacentes parmi la pluralité de cellules de batterie disposées dans le support de cellules est de 5 mm ou moins.
